# EUROPEAN PATENT SPECIFICATION

(11) **EP 1 712 057 B1**
(45) Date of publication and mention of the grant of the patent: **18.12.2013**
(21) Application number: 05704801.9
(22) Date of filing: 01.02.2005
(51) Int. Cl.: H04L 29/06, H04W 4/06, H04W 28/04, H04W 28/06, H04W 80/00

(54) **BROADCAST/MULTICAST SERVICES WITH UNIDIRECTIONAL HEADER COMPRESSION**
BROADCAST/MULTICAST-DIENSTE MIT UNIDIREKTIONALER KOPFTEILKOMPRIMIERUNG
SERVICES DE DIFFUSION/MULTI-DIFFUSION A COMPRESSION D'EN-TETE UNIDIRECTIONNELLE

(30) Priority: 06.02.2004 SE 0400288
(43) Date of publication of application: 18.10.2006
(73) Proprietor: Telefonaktiebolaget LM Ericsson (publ), 164 83 Stockholm (SE)
(72) Inventor: JONSSON, Lars-Erik, S-977 52 Lule (SE); PELLETIER, Ghyslain, S-961 44 Boden (SE)
(74) Representative: HOFFMANN EITLE
(86) International application number: PCT/SE2005/000144
(87) International publication number: WO 2005/076562

(56) References cited:
- WO-A2-03/030453
- WO-A2-03/105442
- US-A1- 2002 141 391
- US-A1- 2003 134 651
- US-A1- 2003 145 064
- US-A1- 2004 179 689

## Description

### BACKGROUND

FIELD OF THE INVENTION

The present invention pertains generally to telecommunications, and particularly to the compression of headers of packets such as media packets.

RELATED ART AND OTHER CONSIDERATIONS

Due to the tremendous success of the Internet, it has become a challenging task to make use of the Internet Protocol (IP) over all kinds of links. However, because of the fact that the headers of the IP protocols are rather large, it is not always a simple task to make this come true for narrowband links, such as cellular links, for example. As an example, consider ordinary speech data transported by the protocols (IP, UDP, RTP) used for Voice-over-IP (VoIP), where the header may represent about 70% of the packet resulting in a very inefficient usage of the link.

The term "header compression" (HC) encompasses the art of minimizing the necessary bandwidth for information carried in headers on a per-hop basis over point-to-point links. Header compression techniques in general have a more than ten-year-old history within the Internet community. Several commonly used header compression protocols exist, such as the following: (1) Van Jacobson. Compressing TCP/IP Headers for Low-Speed Serial Links. IETF RFC 1144, IETF Network Working Group, February 1990; (2) Mikael Degermark, Björn Nordgren, Stephen Pink. IP Header Compression, IETF RFC 2507, IETF Network Working Group, February 1999; and (3) Steven Casner, Van Jacobson. Compressing IP/UDP/RTP Headers for Low-Speed Serial Links, IETF RFC 2508, IETF Network Working Group, February 1999.

Header compression takes advantage of the fact that some fields in the headers are not changing within a flow, or change with small and/or predictable values. Header compression schemes make use of these characteristics and send static information only initially, while changing fields are sent with their absolute values or as differences from packet to packet. Completely random information has to be sent without any compression at all.

Header compression is thus an important component to make IP services over wireless, such as voice and video services, economically feasible. Header compression solutions have been developed by the Robust Header Compression (ROHC) Working Group of the Internet Engineering Task Force (IETF) to improve the efficiency of such services.

Robust Header Compression (ROHC), as defined in RFC 3095 (Bormann, C., "RObust Header Compression (ROHC): Framework and four profiles: RTP, UDP, ESP, and uncompressed", RFC 3095, Internet Engineering Task Force, July 2001), is an extensible framework for which profiles for compression of various protocols may be defined. For real-time multimedia services (e.g. voice, video), the application data is transported end-to-end within an IP/UDP/RTP stream. Header compression of IP/UDP/RTP is defined by the ROHC profile 0x0001 (ROHC RTP) and is applicable for Voice-over-IP (VoIP) services among others. The ROHC RTP header compression scheme has been designed to efficiently compress the IP/L1DP/RTP headers over an arbitrary link layer.

A number of other ROHC profiles have also been defined for compression. Among these are (1) IP/UDP/RTP headers (described in: Jonsson, L. and G. Pelletier, RObust Header Compression (ROHC): A Link-Layer Assisted ROHC Profile for IP/UDP/RTP, IETF RFC 3242, April 2002; and Liu, Z and K. Le, Zero-byte Support for Bidirectional Reliable Mode (R-mode) in Extended Link-Layer Assisted RObust Header Compression (ROHC) Profile, IETF RFC 3408, December 2002); (2) IP only headers (described in: Jonsson, L. and G. Pelletier, RObust Header Compression (ROHC): A compression profile for IP, IETF RFC 3843, June 2004); (3) IP/TCP headers (described in: Pelletier, G., Jonsson, L., West, M. and R. Price RObust Header Compression (ROHC): TCP/IP Profile (ROHC-TCP), Internet Draft (work in progress), <draft-ietf-rohc-tcp-08.txt>, October 2004); and (4) IP/UDP-Lite/RTP headers (described in: Pelletier, G., RObust Header Compression (ROHC): Profiles for UDP-Lite, Internet Draft (work in progress), <draft-ietf rohc-udp-lite-04.txt>, June 2004).

Except for negotiation (see also Bormann, C., Robust Header Compression (ROHC) over PPP, IETF RFC 3241, April 2002), ROHC profiles only requires framing and error detection to be provided by the link layer, while all other functionality is handled by the ROHC scheme itself.

The ROHC profiles defined in RFC 3095, RFC 3242, RFC 3408, "IP-ONLY" (Jonsson, L. and G. Pelletier, RObust Header Compression (ROHC): A compression profile for IP, IETF RFC 3843, June 2004) and "ROHC-UDPLite" (Pelletier, G., RObust Header Compression (ROHC): Profiles for UDP-Lite, Internet Draft (work in progress), <draft-ietf-rohc-udp-lite-04.txt>, June 2004) support three different modes of operation. In short, for a specific context, the mode of operation controls the actions and the logic to perform as well as the packet types to use during different states of the header compression operation. Packet types and formats that are allowed may vary from one mode to the other. The Unidirectional mode (U-mode) is used at the beginning of any ROHC compression before any transition to other modes may occur. The Bidirectional Optimistic mode (O-mode) seeks to maximize the compression efficiency and sparse usage of the feedback channel. The Bidirectional Reliable mode (R-mode) seeks to maximize robustness against loss propagation and context damage propagation.

When in U-mode, packets are sent from compressor to decompressor only. The U-mode is thus usable over links where a return path from decompressor to compressor is either not desired or not available. Periodical refreshes are used in U-mode. The U-mode is particularly applicable to broadcast or multicast channels.

The O-mode is similar to the U-mode with the difference that a feedback channel is used to send error recovery requests and (optionally) acknowledgements of significant context updates from the decompressor to compressor. For most ROHC profiles, the U-mode and the O-mode are often indistinctly referred to using the term U/O-mode, due their rather similar characteristics - such as an identical set of packets formats for both modes.

The R-mode differs significantly from the two other modes, mainly by making a more extensive usage of the feedback channel and a stricter logic for performing context updates. The R-mode also uses a few different packet types only understood and useful in this mode.

Each mode of operation has different properties in terms of compression efficiency, robustness and processing complexity. Mode transitions may only be initiated by the decompressor. ROHC does not specify how and when each mode should be used (other than that ROHC compression must always start in U-mode). Therefore, the logic for mode transitions is an implementation decision and may be based on measurements of the link characteristics, link conditions, implementation optimizations for a specific mode or may be based on other algorithms. In particular, for Broadcast/Multicast type of services, header compression operates in the unidirectional mode (U-Mode) only, as normally for such services a feedback channel from decompressor to compressor is not available or desired.

A header compression scheme (such as a ROHC Profile) can be conceptualized and/or realized as a state machine. A challenging task is to keep the compressor and decompressor states, called contexts, consistent with each other, while keeping the header overhead as low as possible. There is one state machine for the compressor, and one state machine for the decompressor. The compressor state machine directly impacts the level of compression efficiency, as it is an important part of the logic controlling the choice of compressed packet type to be sent. The purpose of the decompressor state machine is mainly to provide the logic for feedback (if applicable) and to identify the packet types for which decompression may be attempted.

A compression context contains and maintains relevant information about past packets, and this information is used to compress and decompress subsequent packets. As explained in the ROHC documentation, the context of the compressor is the state it uses to compress a header. The context of the decompressor is the state it uses to decompress a header. Either of these or the two in combination are usually referred to as "context", when it is clear which is intended. The context contains relevant information from previous headers in the packet stream, such as static fields and possible reference values for compression and decompression. Moreover, additional information describing the packet stream is also part of the context, for example information about how the IP Identifier field changes and the typical inter-packet increase in sequence numbers or timestamps.

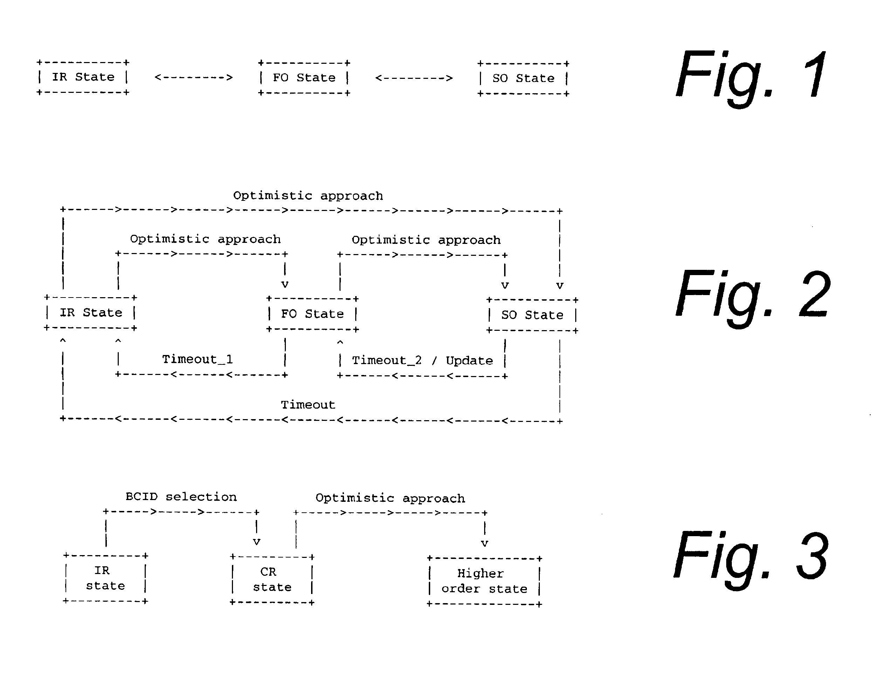

Fig. 1 shows the compressor state machine for the ROHC profiles defined in RFC 3095, RFC 3242, RFC 3408, "IP-ONLY" (Jonsson, L. and G. Pelletier, RObust Header Compression (ROHC): A compression profile for IP, IETF RFC 3843, June 2004) and "ROHC-UDPLite" (Pelletier, G., RObust Header Compression (ROHC): Profiles for UDP-Lite, Internet Draft (work in progress), <draft-ietf-rohc-udp-lite-04.txt>, June 2004). For ROHC compression, the three compressor states are the Initialization and Refresh (IR), First Order (FO), and Second Order (SO) states. The compressor starts in the lowest compression state (IR) and transits gradually to higher compression states. The compressor will always operate in the highest possible compression state, under the constraint that the compressor is sufficiently confident that the decompressor has the information necessary to decompress a header compressed according to that state. See, e.g., RFC 3095, section 4.3.1 (Carsten Bormann, et al. RObust Header Compression (ROHC): Framework and four profiles: RTP, UDP, ESP and uncompressed; IETF RFC 3095, April 2001). In particular while operating in U-Mode, decisions about transitions between the various compression states are normally taken by the compressor on the basis of variations in packet headers and periodic timeouts.

According to RFC 3095, section 4.3.1, the purpose of the Initialization and Refresh (IR) State is to initialize the static parts and may be the dynamic part of the context at the decompressor or to recover after failure. In this state, the compressor sends complete header information. This includes all static and nonstatic fields in uncompressed form plus some additional information. The compressor stays in the IR state until it is fairly confident that the decompressor has received the static information correctly.

The compressor must then have enough confidence that the decompressor has the proper context before a transition to a higher compression ratio takes place. This confidence may be achieved in U-mode by sending a number of context initialization packets repeatedly for a large enough interval. The use of a number of packets may achieve confidence in less than one round trip time (RTT) but cannot absolutely guarantee that the decompressor does have the proper context other than optimistically expect to be successful with a high percentage rate.

In describing the Unidirectional mode, RFC 3095 states that "... [T]ransition to a higher compression state in Unidirectional mode is carried out according to the optimistic approach principle. This means that the compressor transits to a higher compression state when it is fairly confident that the decompressor has received enough information to correctly decompress packets sent according to the higher compression state. When the compressor is in the IR state, it will stay there until it assumes that the decompressor has correctly received the static context information. For transition from the FO to the SO state, the compressor should be confident that the decompressor has all parameters needed to decompress according to a fixed pattern."

In addition, to ensure robustness, a compressor operating in U-mode periodically transits back to a lower compression state (e.g. IR state). In this respect, a periodic refresh of the context in U-mode can be viewed as a procedure similar to the context initialization.

The IR state is thus the state were the compression level is the lowest. Fig. 2, taken from RFC 3095, section 5.3.1, describes the U-Mode state machine. In the U-mode state machine of Fig. 2, Timeout_1 typically corresponds to a periodic sending of the static (and possibly also dynamic) parameters of the decompressor context, while Timeout_2 typically corresponds to a periodic sending of only the dynamic parameters of the decompressor context.

In addition, the context replication (CR) mechanism for ROHC profiles introduce an additional state, the CR state. *See,* Pelletier, G., Robust Header Compression (ROHC): Context replication for ROHC profiles, Internet Draft (work in progress), <draft-ietf-rohc-context-replication-01.txt>, October 2003. To date, only the [ROHC-TCP] profile specifies support for context replication, but other profiles may also support it provided their corresponding standard is updated. The CR state may also be used by a profile operating in U-Mode. Fig. 3 shows the logic added to the previous state machine for the CR state. In U-Mode, downward transitions are performed according to the same logic as described above.

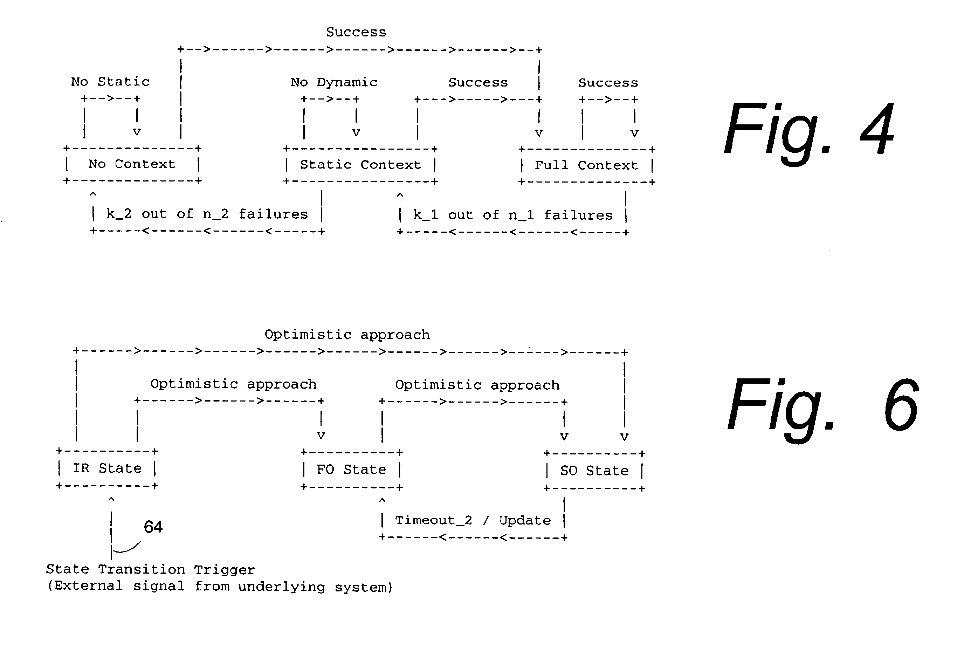

Fig. 4, taken from RFC 3095, section 5.3.2, illustrates an example U-Mode decompressor state machine. The state of the decompressor dictates what type of compressed packet may be decompressed. In the No Context (NC) state, only packets initializing the static part may be decompressed (e.g. ROHC IR packets). In the Static Context (SC) state, only packets containing sufficient information on the dynamic parameters (e.g. ROHC IR-DYN or UOR-2 packets) may be decompressed. In the Full Context (FC) state, any packet may be decompressed. Thus, depending on the condition of the channel and on the success rate of the decompression, the decompressor state machine will transit between the different states and will have to wait for the reception of a suitable packet for attempting decompression.

In unidirectional operation, there is no feedback sent back to the compressor. Therefore, in unidirection operation, the decompressor may (in the worst cases) have up to Timeout_1 of waiting time without possibility to start decompression of the received packets, and up to Timeout_2 before it can re-start compression after severe context damage to the dynamic information.

For the ROHC framework, context initialization requires the compressor to start using the lowest compression state, the Initialization and Refresh (IR state). The first transmitted packets are IR packets to initialize at least the static and the dynamic part of the context. The static part may include information such as Context Identifier (CID), compression profile, the IP source and destination addresses, the UDP source and destination ports, SSRC etc. The dynamic part includes information such as RTP sequence number (RTP SN), payload type, timestamps, timestamp stride etc.

The ROHC framework requires that initialization first uses a number of IR packets, and then possibly followed by a number of IR-DYN packets. The size of these packet types, excluding the payload bits, is in the order of tens of octets.

Initialization and periodic refreshes of a header compression context thus require bandwidth for the bits necessary to be exchanged between compressor and decompressor, and this step is necessary to ensure that higher compression efficiency may be achieved. The confidence from the compressor that the decompressor has achieved proper context implies a certain delay for which the compression efficiency is far from optimal. In some situation, for example real-time VoIP flows over very narrow bandwidth wireless links using 0-byte header compression algorithms, such delay may impact perceived quality until optimal compression efficiency is reached. While the impact for a constant flow is minimal and concealed to the first packets of the flow, it may be more significant for a more bursty and discontinuous flow and should be minimized.

When used over error prone unidirectional links such as wireless broadcast links, a ROHC compressor operating in unidirectional mode (U-mode) faces a very important trade-off between efficiency and reliability. More specifically, when improving spectral efficiency of a header compression operating in a unidirectional mode, both the reliability of the context initialization and the delay to reach the static context state (or full context) at the decompressor (that is the delay from the time when the mobile station joins the channel and the time the decompressor in the mobile station can obtain the static context information) must be considered.

When the periodic transition to initialization and refresh (IR) state in the compressor (Timeout_1) is set to a long interval, fewer large IR packets are transmitted, leading to higher bandwidth efficiency. However, since the wireless links have high error rate, there is a fairly high probability for the transmitted packets to be corrupted and cause repeated decompression failures at the decompressor. Once it is forced back to no context (NC) state by such failures, the decompressor may have to wait for a long time until it receives the periodic IR packets from the compressor necessary to reestablish the context. All packets received during this interval have to be discarded, causing disruption in the service. In addition, the long IR refresh interval will lead to long acquisition time when a MS initially tunes to or switches back to the broadcast channel because the decompressor in the MS cannot be updated immediately.

On the other hand, if the periodic transition to the IR state in the compressor (Timeout_1) is set to happen with a short interval, the decompressor will be able to recover from context loss promptly, achieving higher reliability, and the tuning time for the mobile station will also be short. However, the large number of IR packets sent will lead to much lower efficiency. Therefore, there is a trade-off in bandwidth efficiency when frequently sending IR packets.

The access time is dependent on the time it takes to successfully obtain the static part of the context and begin decompression of compressed headers. It is thus directly related to the interval between the periodic refreshes as set by the compressor.

Broadcast and multicast (BCMCS) services differ from unicast services in that they do not specifically target a single receiver, but are rather forms of transmission where multiple recipients will receive the service. Where unicast transmit to an address (either network or link-layer address) corresponding to one and only one receiver, broadcast and multicast uses addresses shared by a number, or a group, of receivers. A broadcast is generally a transmission that can be received by anyone who can tune to the channel, while multicast is a transmission between a sender and multiple specific receivers on a network.

For broadcast/multicast services using ROHC in U-mode, it is desirable to insure a short access time to the IP service (including fast context initialization). This must be done while minimizing the overhead introduced by the header compression algorithm, which purpose is to ensure reliability in the absence of a feedback channel between the decompressor and the compressor.

The document "Broadcast/Multicast Services - Stage 1", Revision A, 3GPP2, S.P0030-A Version 0.4.3, June 12, 2003, states in section 7.1 thereof that, for BCMCS transmission of data, that it will be possible to use IP Header Compression. Of particular interest for BCMCS services is the robustness characteristics of the header compression scheme over a channel with relatively high bit error rates, with no or limited link retransmissions, and with no or limited feedback capability. With respect to this, ROHC has a clear advantage when compared to other existing header compression schemes such as CRTP and eCRTP.

Further, section 8.1.6 the 3GPP2, S.P0030-A Version 0.4.3, June 12, 2003, document states that a BCMCS service to a user "shall be activated upon request for a BCMCS program for which the user is authorized".

A framework document, Broadcast/Multicast Services (BCMCS) Framework Draft Document, Version 1.2, 3GPP2 BCMCS ad-hoc group, May 2003, provides an architectural overview and a framework description of the Broadcast-Multicast Service (BCMCS) for the cdma2000^{®1} networks. The main purpose of the BCMCS is to allow optimization of the use of the cdma2000^{®} radio interface for delivery of BCMCS content stream(s) to one or more terminals in one or more regions of an operator's network.

The framework document defines the use of a controller. Section 4.2, page 12, of the framework document specifically includes in the architecture an interface between this controller and a Packet Data Serving Node (PDSN). The Packet Data Serving Node (PDSN) is similar in functionality to 3GPP's SGSN node. This BCMCS controller/PDSN interface provides BCMCS session-related information such as Flow Treatment (e.g., header compression, or header removal), the mapping between the identifiers used to distinguish the BCMCS flows (BCMCS_FLOW_ID), and Multicast IP address and port number from the BCMCS Controller to the PDSN. This interface also exchanges the BCMCS authorization information for bearer path setup of BCMCS.

The framework document (in section 4.2, page 13) also includes an interface between the BCMCS controller and the mobile terminal. The purpose of this BCMCS controller/mobile station interface is to provide the BCMCS client application in the mobile station (MS) with access to information about available BCMCS sessions: including Content Provider Name, Content Name, BCMCS_FLOW_ID(s), start time of the BCMCS session, duration of the BCMCS session, flow treatment (e.g., header compression, or header removal), and session description (e.g., codec type), and the transport and application protocols etc,

The BCMCS bearer paths are connections between a base station controller node (BSC) and a packet control function (PCF) and between the packet control function (PCF) and the Packet Data Serving Node (PDSN). The packet control function (PCF) is an entity in a radio access network that controls the transmission of packets between the base station and the PDSN, and is often physically integrated with the base station. The BCMCS bearer paths are setup by the network upon registration by the user using IOS signaling messages (likely within a block of bits - BLOBs). BCMCS services use their own connections, independent of other existing non-BCMCS service instances to the mobile station.

The framework document also states that upon the bearer path being established, if header compression is enabled by the PDSN, the PDSN will periodically send the header context on the same bearer path.

Jin, Haipeng, and Wang, Jun, "Header Compression For BCMCS", October 2003, propose and advocate the use of ROHC in unidirectional mode as the preferred header compression algorithm for BCMCS services. The proposal also includes the adoption of modifications to the ROHC unidirectional mode of operation for header compression in BCMCS. It is alleged that the existing unidirectional mode of operation in ROHC does not work efficiently enough when used over broadcast links with significant error rates and scarce bandwidth. The proposal suggests that static context information be sent in advance to the decompressor via BCMCS information acquisition, on a separate channel. This proposal entirely disables the ROHC IR state when operating in U-mode in BCMCS services, and sends the IR parameters out-of-band instead - only once during channel information acquisition. Should a decompressor lose its context, the mobile terminal should initiate a new registration to the service to trigger a new channel information acquisition exchange. Yet this proposal requires significant changes to the state machine logic, as well as an unnecessarily complex interaction between the header compression algorithm and the underlying system. A simpler approach would be preferable. Also, this proposal is limited to one IP multicast/broadcast flow per ROHC instance (ROHC channel). This can pose unnecessary constraints on the processing and memory usage required in the terminal.

International Patent Publication WO2004017577 relates to aggregation of feedback from mobile terminals within a MBMS serving area, in order (based on a threshold) to decide to perform downward transitions from SO to FO to IR. This WO seeks to improve error recovery of ROHC in U-mode using a tradeoff between a number of terminals in need of recovery verses spectral efficiency. The WO targets the scaling of multicast and broadcast services where a return channel for ROHC in U-mode is employed or where such return channel is provided in a RRC layer.

Thus, one problem is that, when operating in U-Mode, efficiency is limited from the tradeoff between the frequency of context updates (e.g. downward transitions) for the purpose of maintaining synchronized contexts at both ends of the link, and the time for a decompressor having no suitable context to resynchronize with the compressor context - such as after a burst of errors or when acquiring the broadcast/multicast channel.

One prior art approach is shown in US 2002/0141391, which discloses a method and apparatus for data packet transport in a wireless transmission system in which ROHC is used. Subscribers "tunes" to the broadcast channel and waits for the ROHC Initialization & Refresh (IR) packets periodically sent which are needed to start decompressing received packets.
Another prior art approach is shown in WO 03105442 which discloses a method and apparatus for processing packet flows in a communication system where ROHC is used for header compression. Packet flow parameter information is used to determine flow treatment. A bearer connection is established and monitored for information relating to flow treatment.

What is needed, therefore, and an object of the present invention, is a technique reducing access time and improving compression efficiency in broadcast/multicast IP services with unidirectional header compression within a multicast/broadcast multimedia system.

### BRIEF SUMMARY

A communications network and method make a multicast/ broadcast multimedia service available to a remote unit over an air interface, and in so doing include compression of headers of the media flow. The network and method according to claim 5 and claim 1 involves generation, external to header compression logic, of a trigger signal which is applied to a compressor to trigger a lowest compression state of the header compression logic.

In an example embodiment, the communications network comprises a multicast/broadcast multimedia server which makes the multicast/broadcast multimedia service available t the remote unit over the air interface. A header compressor subjects the media flow to unidirectional header compression logic for compressing the headers of the media flow. A network node, upon receiving a request indicating that the remote unit seeks initial access to the multicast/broadcast multimedia service, generates a trigger signal which is applied to the compressor to trigger a lowest compression state of the header compression logic. The trigger signal is generated external to the header compression logic, and prior to generation of an initial packet of the media flow by the multimedia server. Preferably the trigger signal is derived using one or more broadcast/multicast channel acquisition events initiated by the remote unit.

Thus, even though the compressor may be configured by convention or standard to start the lowest compression state upon receiving an initial packet of the media flow, the lowest compression state is instead begun by the external trigger signal. The example network and method is thus compatible with robust header compression (ROHC) in a unidirectional mode, wherein the compressor has the Initialization and Refresh (IR) state as its lowest compression state.

The network node can be, for example, the node at which the multimedia server resides. The compressor is preferably situated at a packet data serving node (PDSN), but may also be situated at a node of the radio access network (RAN). The multimedia server can also be situated at the packet data serving node (PDSN).

As both a distinct and combinable aspect, the network node can generate the trigger signal to trigger a transition to the lowest compression state of the header compression logic upon receipt of an indication of a decompression problem which has occurred at the remote unit. The decompression problem can be, for example, a compression initialization failure or compression static context damage. The indication of the decompression problem is preferably an attempt by the remote unit to reinitiate access to the muhicast/broadcast multimedia service.

Thus, the external trigger signal is generated either upon a remote unit seeking initial access to a multimedia service, and/or upon the remote unit (having suffered a decompression problem) seeking to reinitiate access to the multimedia service. The external trigger signal thus obviates the conventional practice of having the compressor periodically (e.g., at the end of predetermined timeouts) returning (often needlessly) to the lowest compression state. The external trigger signal thus promotes spectral efficiency in the transmission of the broadcast and multicast services by reducing the overhead incurred from the periodic sending of larger packets involved in the lowest compression state, and tends to minimize delay.

**BRIEF DESCRIPTION OF THE DRAWINGS**

The foregoing and other objects, features, and advantages of the invention will be apparent from the following more particular description of preferred embodiments as illustrated in the accompanying drawings in which reference characters refer to the same parts throughout the various views. The drawings are not necessarily to scale, emphasis instead being placed upon illustrating the principles of the invention.

Fig. 1 is a diagrammatic view of an example compressor state machine.

Fig. 2 is a diagrammatic view of an example U-Mode state machine.

Fig. 3 is a diagrammatic view showing logic added to a state machine for the CR state.

Fig. 4 is a diagrammatic view showing an example U-Mode decompressor state machine.

Fig. 5 is a schematic view of a first example embodiment of a communications network wherein an external trigger signal is used to transitioning a packet header compressor to a lowest compression state.

Fig. 6 is a diagrammatic view of an example compressor state machine which receives an external trigger signal for transitioning to a lowest compression state.

Fig. 7A is a schematic view showing a first example variation of the communications network of Fig. 5; Fig. 7B is a schematic view showing a second example variation of the communications network of Fig. 5

Fig. 8 is a timing diagram illustrating basic, representative, example steps or events included in an example method of using an external trigger signal for transitioning a packet header compressor to a lowest compression state.

Fig. 9 is a schematic view of a second example embodiment of a communications network wherein an external trigger signal is used to transitioning a packet header compressor to a lowest compression state.

Fig. 10 is a diagrammatic view showing basic, representative, example steps performed by a header decompressor of a remote unit of the network of Fig. 9.

**DETAILED DESCRIPTION OF THE DRAWINGS**

In the following description, for purposes of explanation and not limitation, specific details are set forth such as particular architectures, interfaces, techniques, etc. in order to provide a thorough understanding of the present invention. However, it will be apparent to those skilled in the art that the present invention may be practiced in other embodiments that depart from these specific details. In other instances, detailed descriptions of well-known devices, circuits, and methods are omitted so as not to obscure the description of the present invention with unnecessary detail. Moreover, individual function blocks are shown in some of the figures. Those skilled in the art will appreciate that the functions may be implemented using individual hardware circuits, using software functioning in conjunction with a suitably programmed digital microprocessor or general purpose computer, using an application specific integrated circuit (ASIC), and/or using one or more digital signal processors (DSPs).

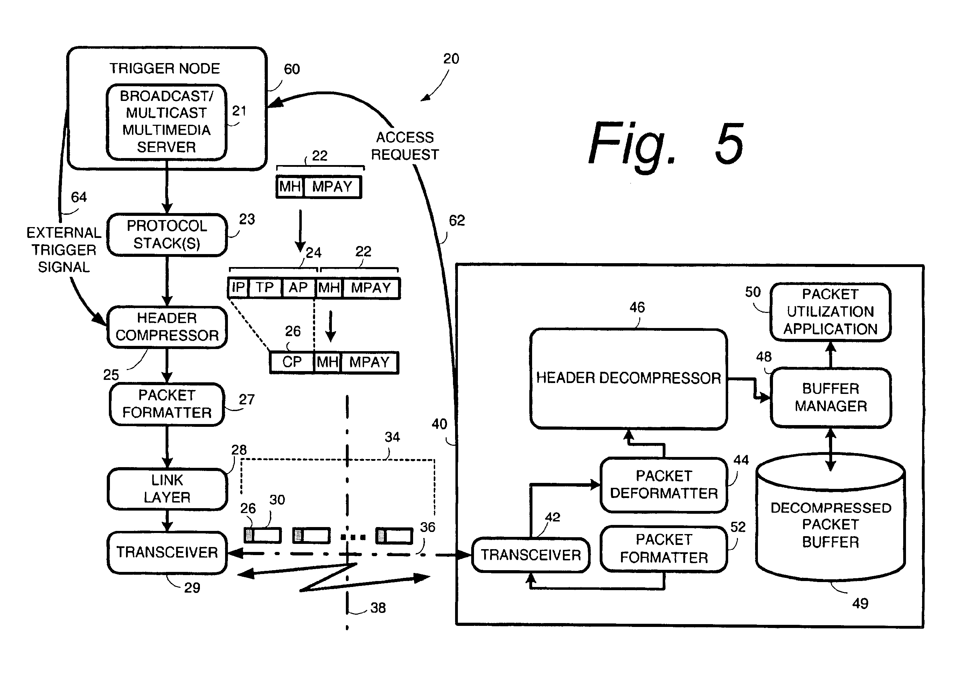

Fig. 5 shows an example, non-limiting, representative communications network 20 which forms a suitable context for providing a broadcast/multicast multimedia service. The communications network 20 includes a multicast/broadcast multimedia server 21 which generates packets or otherwise serves as a packet source for a multicast/broadcast multimedia service. The multicast/broadcast multimedia server 21 generates or supplies media packets such as packet 22. Typically each media packet has a media payload (MPAY) and header (MH), and (as shown in Fig. 5) is applied to a protocol stack 23.

The protocol stacks 23 serve to affix protocol headers 24 to the media packet 22. The particular protocols comprising the protocol stack can vary, and typically comprise an application protocol (AP), under a transport protocol (TP), under an Internet Protocol (IP). In one example implementation, the protocol headers 24 comprise IP, UDP, and RTP headers which are added to the media packet 22.

The media packet 22 with its appended protocol headers 24 is applied to a packet header compressor 25. The packet compressor 25 compresses the protocol headers 24, resulted in a compressed header 26 for the packet.

The media packet 22 with its appended protocol headers 24 is applied to a packet header compressor 25. The packet compressor 25 compresses the protocol headers 24, resulted in a compressed header 26 for the packet. The header compressor 25 performs header compression according to any of many suitable header compression algorithms, either conventional (such as ROHC, for example) or otherwise. After the header of the packet is compressed by header compressor 25, a packet formatter 27 incorporates the compressed header into a packet which is applied to a transceiver 29. The transceiver 29 serves to transmit the packet, such as packet 30 with its compressed header 26, in a flow 34 of packets over link 36 across an interface 38 to a remote unit 40. The flow 34 of packets, likely most with compressed headers, need not be continuous, but can instead be sporadic, depending on the type of packet service involved and the nature of the material included in the packet service (e.g., media type).

The packet stream issuing from packet source 21 of Fig. 5 can be realized in various ways. For examples, the packet stream can either (1) be pre-recorded and sent by a server (in this case the media in the media packet 22 is already encoded); (2) come from a transcoder (which adapts the original media from a source to another media encoding potentially more suitable and/or supported by terminals); or (3) come from a source that performs real-time encoding of live media. Thus, the header compressor can receive an input media packet from any of several types of media sources somewhere within the IP network. The packet source 21 can be any suitable source, such as a media server, for example, and may be located in a node or network common or remote from header compressor 25.

The aforementioned telecommunications elements, illustrated to the left of interface 38 in Fig. 5, are illustrated only as certain representative elements germane to the present discussion, and understandably do not constitute the whole of the telecommunications network 20, as many other unillustrated elements are also present. Moreover, the set of illustrated elements may be distributed throughout one or more nodes or networks (e.g., core networks or radio access networks), and in some instances an individual element itself may be distributed to plural platforms and/or plural nodes. Thus, for sake of simplification the illustrated elements are shown as being connected directly and successively together in the manner of Fig. 5.

While remote unit 40 has numerous elements, certain basic, representative elements suitable for an understanding of the header decompression performed by remote unit 40 are shown in Fig. 5. Among these elements are transceiver 42, which applies packets received on link 36 to a packet deformatter 44. The packet deformatter 44 serves essentially to extract a compressed header from the received packet. After the compressed header is extracted, it is sent to header decompressor 46 for decompression. After the header of a packet has been decompressed by header decompressor 46, the packet including its decompressed header is stored by buffer manager 48 in decompressed packet buffer 49. The buffer manager 48 also retrieves decompressed packets from decompressed packet buffer 49 as needed for the packet utilization application 50, e.g., the particular application which is involved in receiving a media stream or the like. In addition, remote unit 40 optionally includes a packet formatter 52 for preparing packets to be sent back across link 36 (as well as various unillustrated elements upstream from packet formatter 52).

The remote unit 40 may take the form of, or also be known as, any of numerous devices/appellations such as mobile station, mobile terminal, wireless terminal, or user equipment unit. In the illustrated embodiment of Fig. 5, remote unit 40 happens to be wireless. As such, the remote unit 40 receives radio frequency transmissions over an air or radio interface, depicted by dashed-dotted line 38 in Fig. 5. Use of a wireless remote unit 40 is consistent with, for example, the RFCs cited herein. Yet it will be appreciated that the header decompression techniques described herein are not limited to use with any particular type of remote terminal or terminal interface, and that the techniques can instead or additionally be utilized for transmissions that are not wireless, or are by types of radiation or waves other than radio waves.

The header compressor 25 serves to compress headers of packets (such as media packets) which have been supplied by packet source 21 and possibly additionally encoded. The packet header compressor 25 is essentially a state machine which operates in various compression states, including a lowest compression state and one or more higher order compression states. In conjunction with its lowest compression state, header compressor 25 sends context information to decompressor 46 for use by the decompressor in decompressing compressed headers of the media packets. As used herein, "context information" encompasses one or both of context initialization information and context refresh information.

Fig. 6 illustrates, from a state machine perspective, an example implementation of packet header compressor 25 wherein the packet header compressor 25 employs the Unidirectional mode (U-mode) of RObust Header Compression (ROHC). The three ROHC states illustrated in Fig. 6 are the lowest compression state, the Initialization and Refresh (IR) state; the First Order (FO) state, and Second Order (SO) state. The packet header compressor 25 starts in the lowest compression state (IR) and transits gradually (e.g., successively) to the higher compression states.

The communications network 20 further includes a network node 60. The network node 60 is a node which receives a request message or signal depicted as access request 62 in Fig. 5. The access request 62 indicates that the remote unit 40 seeks access to the multicast/broadcast multimedia service provided by multicast/broadcast multimedia server 21. In one example implementation the protocol for the access request 62 can be a Broadcast Control Protocol and the particular message used for accessing the service can be a message know as "BCMCSFlowRegistration message for dynamic broadcast", such protocol and message being described, e.g., at <http://www.3gpp2.org/Public html/specs/C.S0054-0 v1.0 021704.pdf> http://www.3gpp2.or/Public_html/specs/C.S0054-0 v1.0 021704.pdf "cdma2000 High Rate Broadcast-Multicast Packet Data Air Interface Specification".

Upon receiving access request 62, network node 60 generates a trigger signal 64. For this reason, network node 60 is also herein known as the "triggering" node. The trigger signal 64 is applied to packet header compressor 25 to trigger a lowest compression state of the header compression logic, e.g., the Initialization and Refresh (IR) state when using ROHC. The trigger signal 64 is generated external to the header compression logic, and thus prior to generation of an initial packet of the media flow by the multimedia server 21. The trigger signal 64 is internal to an implementation of the triggering node 60/PDSN node 70 and the BCMCS controller, which can be the same node in most cases. As shown in Fig. 5, the network or triggering node 60 can be, for example, the node at which the multimedia server 21 resides, e.g., the node which hosts the multicast/broadcast multimedia server 21.

The access request 62 can take the form of one or more broadcast/multicast channel acquisition events initiated by remote unit 40. Thus, the access request 62 can be, for example, the type of activating request contemplated by section 8.1.6 the 3GPP2, S.P0030-A Version 0.4.3, June 12, 2003. In turn, the trigger signal 64 can preferably be derived using the one or more broadcast/multicast channel acquisition events initiated by remote unit 40. The trigger signal 64 can be applied, for example, over an interface such as the BCMCS controller/PDSN interface described in the framework document, Broadcast/Multicast Services (BCMCS) Framework Draft Document, Version 1.2, 3GPP2 BCMCS ad-hoc group, May 2003, section 4.2, page 12.

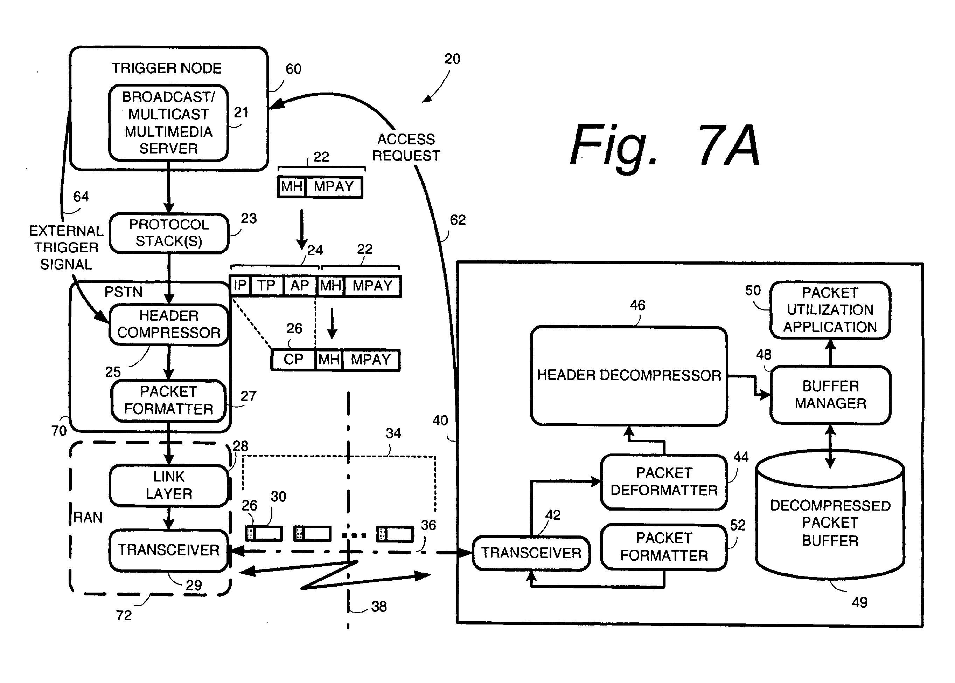

As shown in an example variation illustrated in Fig. 7A, the packet header compressor 25 is preferably situated at a node such as a packet data serving node (PDSN) 70. The PDSN node 70 is essentially equivalent to a Serving GPRS Support Node (SGSN) in the 3GPP architecture. The transceiver 29 is situated in a node of a radio access network (RAN) 72, such as a base station or radio base station node, for example. It should also be understood that packet header compressor 25 may instead be situated at a node of radio access network (RAN) 72.

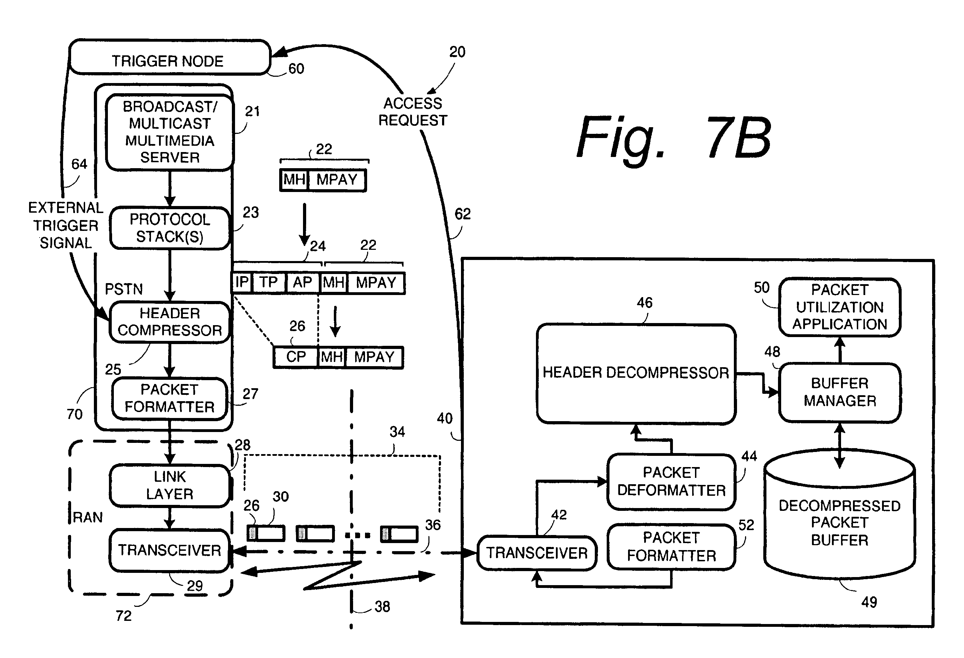

As another variation, shown in Fig. 7B, the multimedia server 21 can also be situated at a node such as the packet data serving node (PDSN) 70. In such case, the triggering node 60 can either be a separate and distinct node as shown in Fig. 7B, or alternatively the triggering node 60 can also be the PDSN node 70.

In an example, non-limiting implementation, packet header compressor 25 may be configured in accordance with conventional, e.g., standardized compression logic such as ROHC. Advantageously, receipt and processing of the external trigger signal 64 need not interfere with the internal compression logic of packet header compressor 25, so that standardized compression logic can still be used without internal modification of the standardized compression logic. The external trigger signal 64 interfaces with packet header compressor 25 in such a way as to obviate or render unnecessary certain aspects of the standardized compression logic, and/or facilitate certain advantageous input settings or parameters of the standardized compression logic, but does so in such a way already accommodated by the standardized compression logic.

In the above regard, a conventional header compressor is typically configured to start the lowest compression state upon receiving an initial packet of the media flow. Thus, the conventional header compressor does not receive an external trigger signal, but has its standardized compression logic launched based on content of the media flow. In addition, the conventional header compressor is configured to refresh at the lowest compression state upon expiration of a preset timeout, e.g., Timeout_1, as above discussed.

Thus, in one example implementation, the packet header compressor 25 is capable of performing in the manner previously described with reference to the compressor of Fig. 1 and the ROHC profiles defined, e.g., in RFC 3095, RFC 3242, RFC 3408. And while being capable of launching its lowest compression state based on media content, rather than doing so such launch is bypassed and view of an earlier receipt of the external trigger signal 64. Moreover, as explained below, the preset timeout, e.g., Timeout_1, can be set to a high value, or even infinity, and thus rendered essentially unnecessary. In other respects, the packet header compressor 25 and the state machine illustrated in Fig. 6 operates essentially in the manner previously described with reference to the compressor of Fig. 1 and the ROHC profiles defined, e.g., in RFC 3095, RFC 3242, RFC 3408.

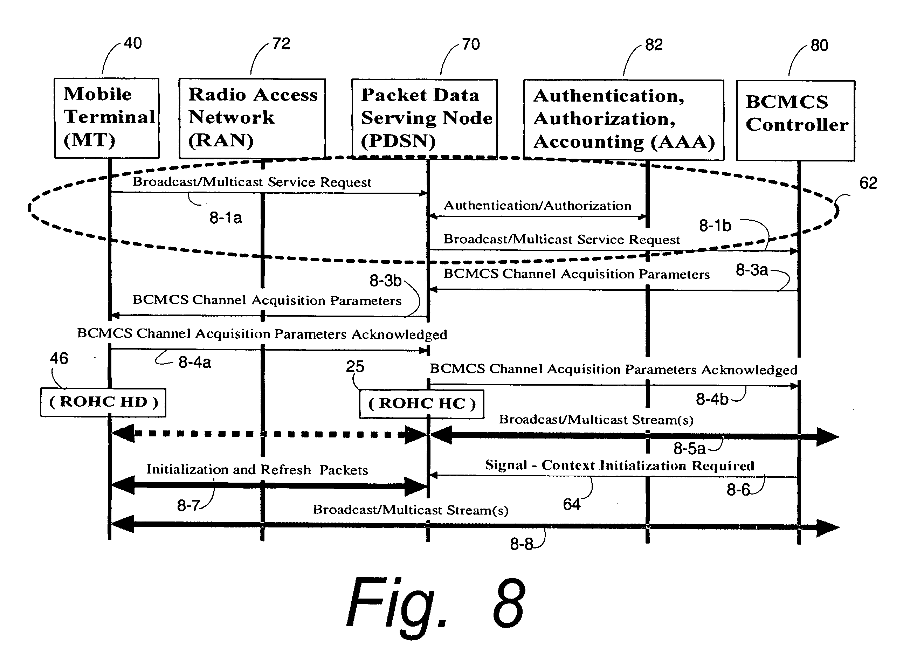

Fig. 8 illustrates basic, representative, example steps or events included in an example mode of a method for operating a communications network such as communications network 20 with its multicast/broadcast multimedia service. Fig. 8 is understood in conjunction with the example implementation of Fig. 7A, wherein a multicast/broadcast multimedia service is available over air interface 38 to remote unit 40, with a media flow of the multicast/broadcast multimedia service being subject to unidirectional header compression logic by packet header compressor 25 at PDSN node 70. In the Fig. 8 example, packet header compressor 25 is located at PDSN node 70 and the header decompressor 46 resides at remote unit 40.

Fig. 8 shows remote unit 40 sending an access request 62 in the form of a broadcast/multicast service request. As shown in Fig. 8, the sending of access request 62 is in two hops: a first request message or signal which is sent as step 8-1a from remote unit 40 to PDSN node 70, and then a second message or signal which is sent or relayed as step 8-1b from PDSN node 70 to BCMCS controller 80. The BCMCS controller 80 can comprise, either partially or fully, the multicast/broadcast multimedia server 21.

As an optional event, and prior to contacting BCMCS controller 80 on behalf of remote unit 40, PDSN node 70 can engage in an authentication/authorization step 8-2 with an authorizing, authentication, and accounting agency node 82.

Upon receipt of the access request 62, e.g., the request of step 8-1b, as step 8-3a the BCMCS controller 80 sends certain BCMCS channel acquisition parameters to PDSN node 70. As step 8-3-b the PDSN node 70 relays the BCMCS channel acquisition parameters to remote unit 40.

Upon receipt of the BCMCS channel acquisition parameters, as step 8-4a the remote unit 40 responds to PDSN node 70 with a message to acknowledge receipt of the BCMCS channel acquisition parameters. As step 8-4b the remote unit 40 relays the BCMCS channel acquisition parameters acknowledge message to BCMCS controller 80.

In Fig. 8 it is presumed that the multicast/broadcast multimedia service proffered by BCMCS controller 80 has been on-going to other remote units in the RAN which have already been afforded access, and that such service continues to these pre-admitted remote units. Step 8-5a of Fig. 8 reflects the on-going broadcast/multicast of the multimedia service provided by BCMCS controller 80. The broken line 8-5b reflects the fact that the multimedia service is not yet being provided to the specific remote unit 40 which is requesting access via the access request 62 shown in Fig. 8.

As a result of receipt of access request 62, and in addition to actions such as those depicted by step 8-3, as step 8-6 the triggering node 60 (e.g., BCMCS controller 80 in the Fig. 7A example) generates and sends the trigger signal 64 to packet header compressor 25 situated at PDSN node 70. As mentioned before, the trigger signal 64 is external to the header compression logic comprising packet header compressor 25. The trigger signal 64, when applied to the packet header compressor 25, triggers a execution of the lowest compression state of the header compression logic of packet header compressor 25. As such, as indicated by step 8-7, packet header compressor 25 sends initialization and refresh packets to header decompressor 46 of remote unit 40. Once initialization is accomplished, the BCMCS controller 80 can transmit the packets comprising the media flow to remote unit 40 as depicted by step 8-8.

Transitions from state SO to state FO are permitted in the compression scheme in conventional fashion and do not require re-initiation of access. These are the transitions that are needed because of the nature of the packets to be compressed, for example, if there is a change in the behavior of some field that deviates form the patterns that were established and that allowed the compressor to operate in state SO.

Packets for initializing the context are sent not only to the one mobile in question upon its access, but also the same packets are sent to all mobiles participating in the broadcast. The transceiver 29 (e.g., Base Station) sends only one channel, and the flow is sent only once over the entire cell area, and it does not matter how many remote units are listening as long as there is at least one, and everyone receives the same thing. So, in order to be capable of decompressing the stream, every remote unit must have the exact same context, otherwise the decompression will fail. If multiple registrations to the same BCMCS channel occur within the same short interval, it may be possible to aggregate these and only generate one single trigger instead of having one trigger for each access. This might help in areas with large number of mobiles where one channel may be especially in the demand (e.g., a sport event in a stadium where the replay of the last play is sent over BCMCS immediately after the play itself).

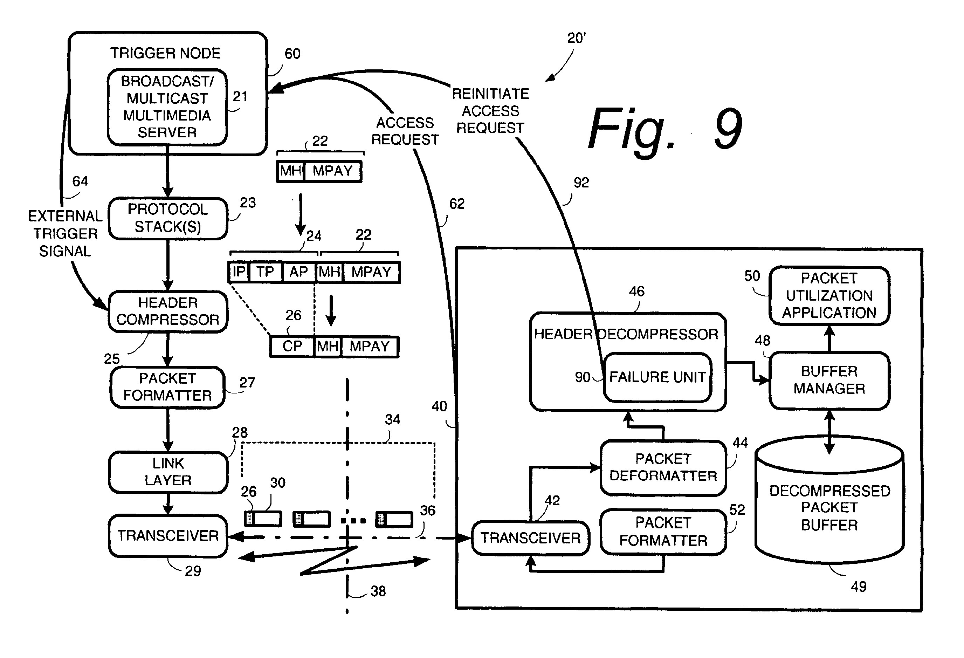

Fig. 9 shows a second example embodiment communications network, particularly communications network 20'. The communications network 20' has the capability of generating the trigger signal 64 in response to the access request 62 in like manner as the embodiment of Fig. 5. As both a distinct and combinable aspect, and as further illustrated in Fig. 9, the triggering node 60 can also generate the trigger signal 64 to trigger a transition to the lowest compression state of the header compression logic upon receipt of an indication of a decompression problem which has occurred at remote unit 40. In this regard, as shown in Fig. 9, header decompressor 46 comprises a decompression failure unit 90 which detects or ascertains the existence of a decompression problem which has occurred at remote unit 40. The decompression problem can be, for example, a compression initialization failure or compression static context damage.

Fig. 9 shows, as signal 92, the indication send from remote unit 40 to triggering node 60 regarding the decompression problem. The indication of signal 92 is preferably in the form of an attempt by remote unit 40 to reinitiate access to the multicast/broadcast multimedia service provided by multicast/broadcast multimedia server 21. Thus, signal 92 is labeled in Fig. 9 as being a reinitiate access request. An example protocol and message which can be utilized as reinitiate access request 92 is the BCMCSFlowRegistration message for dynamic broadcast of the 3GPP2 Broadcast Control Protocol. Reinitiation essentially involves only restarting the procedure from scratch.

Thus, remote unit 40 receives the multicast/broadcast multimedia service from communications network 20' over air interface 38, with a media flow of the multicast/broadcast multimedia service being subject to unidirectional header compression logic for compressing headers of the media flow. The remote unit 40 comprises a transceiver 42 for receiving the media flow and a decompressor 46. The decompressor 46 is arranged so that, upon encountering a decompression problem with the media flow, the decompressor sends reinitiate access request 92 to reinitiate access to the multicast/broadcast multimedia service to the communications network (with an expectation that the request to reinitiate access will trigger a lowest compression state of the header compression logic).

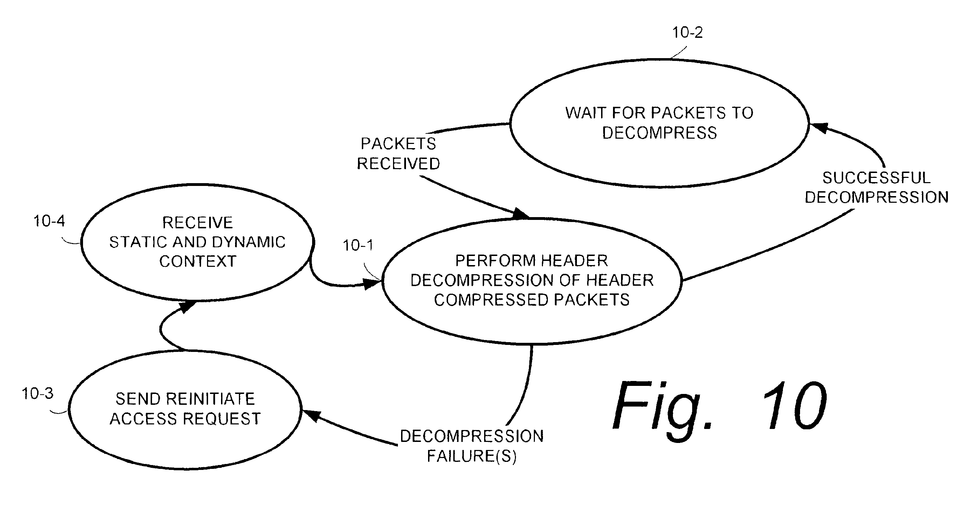

Fig. 10 shows basic, representative, example events/steps performed or states acquired by header decompressor 46 of remote unit 40 in conjunction with the example embodiment of Fig. 9. Event 10-1 of Fig. 10 shows header decompressor 46 performing, or attempting to perform, decompression of a compressed packet header. Decompression continues as long as the decompression proceeds satisfactorily. In this regard, event 10-2 shows header decompressor 46 awaiting arrival of yet further packets whose headers are to be decompressed. Upon arrival, state/event 10-1 is again entered for performing the decompression.

Should there be a decompression failure, e.g., a compression initialization failure or compression static context damage, state/event 10-2 is entered. At event 10-2 the header decompressor 46 discontinues its attempt of processing packets of the media flow, and proceeds to event 10-3. As event 10-3 the header decompressor 46 sends the reinitiate access request 92 to the triggering node 60 in order to request again access to the multicast/broadcast multimedia service. As previously explained, the reinitiate access request 92 can be a simple access request, i.e., the fact that the remote unit 40 might have attempted this initiation before does not mean that a different message than the initial one would be sent. Thereafter, after header decompressor 46 of remote unit 40 receives (as event 10-4) the static and dynamic context necessary for handling decompression of the compressed headers of the media flow, the header decompressor 46 can eventually return to the event 10-1 of performing the decompression. Upon sending of reinitiate access request 92 as event 10-3, the header decompressor 46 does not necessarily have to discontinue the decompression attempts, because subsequent packets such as IR and or IR-DYN packets that may contain enough information to recover may arrive at any time.

The method steps described above in conjunction with Fig. 8 are also applicable on the network side of the interface 38 for the example embodiment of Fig. 9, the difference being in the Fig. 9 embodiment that the remote unit 40, upon detection of a decompression failure, sends the reinitiate access request 92. For example, in terms of the Fig. 9 embodiment the step 8-1a and step 8-1 b of Fig. 8 correspond to receipt and handling of reinitiate access request 92 rather than access request 62. In actuality, the reinitiate access request 92 is essentially a repeat of the access request 62 previously sent by the remote unit 40, but prompted by a decompression failure rather than an attempt for an initial access to the multicast/broadcast multimedia service. Fig. 8 also reflects the Fig. 9 embodiment in that (as step 8-6) the BCMCS controller 80 generates, external to the header compression logic, the trigger signal 64 which is applied to the compressor to (again) trigger a lowest compression state of the header compression logic.

It will be appreciated that the second embodiment of Fig. 9 is also susceptible to the variations of Fig. 7A and Fig. 7B, as well as other variations.

Thus, the external trigger signal is generated either upon a remote unit seeking initial access to a multimedia service, and/or upon the remote unit (having suffered a decompression problem) seeking to reinitiate access to the multimedia service. The external trigger signal thus obviates the conventional practice of having the compressor periodically (e.g., at the end of predetermined timeouts) returning (often needlessly) to the lowest compression state. The external trigger signal thus promotes spectral efficiency in the transmission of the broadcast and multicast services by reducing the overhead incurred from the periodic sending of larger packets involved in the lowest compression state, and tends to minimize delay.

Thus, as described above, the access delay improvement is achieved by introducing/defining a system-specific (external to the header compression logic) IR state transition signal towards the compressor, e.g., trigger signal 64. This trigger signal 64 is generated by the system (e.g., communications network) upon an access or service registration attempt from a remote unit to the radio access network (RAN) when requesting access to a broadcast/multicast channel or service. The packet header compressor 25 receives this signal (trigger signal 64). The trigger signal 64 in turn triggers the context initialization and refresh (i.e. transition to IR State) procedure. A number of IR packets are thus sent upon reception of this trigger (optimistic approach), preferably over the BCMCS bearer to all receivers, or even using a separate bearer depending on how reliability is achieved.

Inventors have thus recognized that the presence of the BCMCS controller/PDSN interface in the BCMCS architecture provides opportunities to optimize the header compression algorithm for broadcast/multicast services, by providing means for the BCMCS controller 80 to signal the PDSN node 70 that a new user is accessing the BCMCS service. In addition, the inventors have recognized that the presence of the BCMCS controller/remote unit interface in the BCMCS architecture provides opportunities to optimize the header compression algorithm for broadcast/multicast services, by providing means for remote unit 40 to make reliable access to the service.

The reliability of the context initialization phase is achieved in two different ways. Reliability is first achieved by requiring that the decompressor 46 re-initiates the access to the broadcast/multicast IP service (in whole or in part) upon failure of the context initialization procedure at the decompressor (i.e., no IR packets initialize the new context). This makes it possible for the compressor to set the timeout value (U-mode) for the transition back to the IR state (Timeout_1) to a rather large (or even infinite) value, based on: (a) the understanding that IR packets need only be sent upon a state transition trigger generated by the underlying system to the compressor upon the remote unit 40 making an access to the broadcast/multicast service; and (b) the agreement that the remote unit 40 will re-initiate the access upon static context damage or initialization failure.

Reliability is secondarily achieved by requiring that packets initializing the context (at least the static part) be transmitted reliably, possibly on a separate bearer.

The trigger signal 64 thus provides alternatives to the normal behaviour of having q remote unit 40 wait for the next periodic refreshes of the static part of the context over the multicast/broadcast channel to acquire the static context and transit to a higher compression state.

The features herein provided allow the compressor to perform context initialization more efficiently, and removes the absolute need for periodic updates in multicast/broadcast services. For example, the value of Timeout_1 can be set to infinite. This is made possible from the fact that other procedures (such as BCMCS information acquisition and/or registration to the service) can occur prior to the first packet within a session, and is particularly advantageous in multicast/broadcast systems where service and/or channel acquisition parameters are not statistically provided. The net result of this procedure is that fewer bits are transmitted and delay towards accessing the service is minimized.

The generic terms "header compression", "header compressor" and "header decompressor" are used to show that the applicability of this idea is not limited to any specific header compression scheme.

An open standard for a service called Instant-Talk-over-Cellular (PoC) is being developed for application in handsets for GSM, EDGE, UMTS and CDMA systems. Instant-Talk-over-Cellular (PoC) is a "walkie-talkie" in a cellular telecommunication system. PoC enabled handsets will most likely be equipped with a PoC-button (hardware or software). When this button is pressed the handset connects the user directly to a friend, a family member, or even a whole group of people of your choice, one-to-one or one-to many. Like a "walkie-talkie" the PoC service is half-duplex, although full duplex may be available at a later stage. It is important to have low setup delay in order to allow for the user to start speak immediately after pressing the button. It is also important that the PoC service is supported in an efficient manner in the radio network since it is expected to be cheaper than circuit switched voice and since it is likely to become a mass-market service with high penetration.

A typical usage of PoC is that a group of persons (e.g. youths, or professionals like workers at a building site) use the PoC terminals to keep the group updated on what is on-going. It is also likely that the group participants are geographically co-located. Current solutions use one dedicated radio channel (and core network) resource per group participant also in this scenario, which obviously is costly in terms of both radio and core network resources. It is thus foreseeable that such service may be used over a multicast (BCMCS) service.

Thus, herein provided is, e.g., a method for reducing access time and improve compression efficiency in broadcast/multicast IP services with unidirectional header compression within a multicast/broadcast multimedia system. The system generates a state transition signal external to the header compression algorithm to trigger a compressor state transition. A trigger is derived using one or more broadcast/multicast channel acquisition events initiated by the remote unit. A downward transition is performed by the compressor for reducing the time required for the decompressor to reach static or full context. Preferably a transition to a lower compression state (e.g. IR state) occurs only upon reception of a state transition trigger from a system external to the header compression implementation (i.e. the conventional periodic downward transitions at the compressor are not performed). The header compressor and/or decompressor are/is implemented according to a header compression schemes in general.

Advantageously, the access time for IP multicast/broadcast services is improved when using Robust Header Compression (ROHC) in the unidirectional mode (U-mode) of operation, i.e., it minimizes the delay required for the decompressor in the remote unit to reach the Full Context (FC) state when joining the channel. In addition, the spectral efficiency of broadcast and multicast IP services is maximized by reducing the overhead incurred from the periodic sending of larger IR packets.

Advantageously, the access time is improved by using an explicit state transition trigger from the system to the compressor when a remote unit accesses a broadcast or a multicast IP service.

Thus, the embodiments described herein are particularly useful for one-to-many applications sent over multicast or broadcast radio channels (such as the so-called Push-to-talk VoIP application, or Push-to-talk over Cellular - PoC). The embodiments are also very relevant to the BroadCast MultiCast Services (BCMCS) currently being defined in 3GPP2 by the BCMCS ad-hoc group. The embodiments are also potentially useful for 3GPP's Multicast/Broadcast Multimedia System (MBMS) work item and in GSM-Satellite, if ROHC operating in U-Mode is used.

The embodiments are particularly applicable to most ROHC profiles, including (but not limited to) the ROHC LLA and the ROHC RTP header compression profiles. This is particularly applicable to most ROHC profiles, including - but not limited to - the ROHC-TCP (0x0006), ROHC RTP (0x0001), UDP (0x0002), IP (0x0004), ESP (0x0003), UDP-Lite (0x0008), RTP/UDP-Lite (0x0007) header compression profiles. Some of the proposed solutions also have the advantage of not requiring any change to any of the ROHC standards.

It should also be understood that the header decompression techniques and other activities described herein need not be performed at nodes or terminals identically structured as those herein illustrated and/or described. Rather, various functions can be distributed or separated to other nodes or devices, or even networks (e.g., core network and radio access network). Moreover, even the header compression functions can be distributed over plural nodes and/or devices, if desired.

In view, e.g., of the foregoing, the term "network node" as employed herein refers to any node or unit, or portion of node or unit, which performs, either in whole or in part, the context information transmission control described herein.

Further, the node or device which hosts the header compressor 25 may or may not be located more than one node or network interface away from a receiving entity. For example, mention herein that context information is sent over an air or radio interface to a receiving entity (e.g., remote unit 40) does not require that the header compressor 25 be situated in a node or location which borders the radio interface

While the invention has been described in connection with what is presently considered to be the most practical and preferred embodiment, it is to be understood that the invention is not to be limited to the disclosed embodiment, but on the contrary, is intended to cover various modifications and equivalent arrangements included within the scope of the appended claims.

## Claims

1. A method for operating a communications network (20) wherein a multicast/broadcast multimedia service is available over an air interface (38) to a remote unit (40), a media flow (34) of the multicast/broadcast multimedia service being subject to unidirectional header compression logic at a compressor (25), the method ***characterized by*** the steps of:
• receiving an access request (62, 92) indicating that the remote unit (40) seeks initial access to the multicast/broadcast multimedia service; and, in response thereto,
• generating, prior to generation of an initial packet of the media flow (34) and external to the header compression logic, a trigger signal (64) which is applied to the compressor (25) to trigger a lowest compression state of the header compression logic, wherein the trigger signal (64) is derived using one or more broadcast/multicast channel acquisition events initiated by the remote unit (40).

2. A method according to claim 1, wherein the header compression logic performs robust header compression ROHC in a unidirectional mode and the lowest compression state is the Initialization and Refresh IR state.

3. A method according to claim 1, wherein said access request is a reinitiate access request (92) indicating that the remote unit (40) seeks a reinitiate access to the multicast/broadcast multimedia service upon encountering a decompression problem with the media flow (34).

4. A method according to claim 3, wherein the decompression problem is compression initialization failure or compression static context damage.

5. A communications network (20) comprising:
• a multicast/broadcast multimedia server (21) arranged to make a multicast/broadcast multimedia service available to a remote unit (40) over an air interface (38);
• a header compressor (25) arranged to subject a media flow (34) of the multicast/broadcast multimedia service to unidirectional header compression logic for compressing a header of the media flow (34);
***characterized by***
• a network node (60) which is arranged, upon receiving an access request (62, 92) indicating that the remote unit (40) seeks initial access to the multicast/broadcast multimedia service, to generate, prior to generation of an initial packet of the media flow (34) and external to the header compression logic, a trigger signal (64) which is applied to the compressor (25) to trigger a lowest compression state of the header compression logic, wherein the trigger signal (64) is derived using one or more broadcast/multicast channel acquisition events initiated by the remote unit (40).

6. A network according to claim 5, wherein the header compression logic is configured to perform robust header compression ROHC in a unidirectional mode and the lowest compression state is the Initialization and Refresh IR state.

7. A network according to claim 5, wherein said access request is a reinitiate access request (92) indicating that the remote unit (40) seeks a reinitiate access to the multicast/broadcast multimedia service upon encountering a decompression problem with the media flow (34).

8. A network according to claim 7, wherein the decompression problem is compression initialization failure or compression static context damage.

9. A network according to claim 5, wherein the network node (60) which is arranged to generate the trigger signal (64) is a node at which the multicast/broadcast multimedia server (21) resides.

10. A network according to claim 5, wherein the network node (60) which is arranged to generate the trigger signal (64) is a packet data serving node PDSN.

## Patentansprüche

1. Verfahren zum Betreiben eines Kommunikationsnetzes (20), wobei ein Multicast-/Broadcast-Multimedia-Dienst über eine Luftschnittstelle (38) für eine abgesetzte Einheit (40) verfügbar ist, wobei ein Medienfluss (34) des Multicast-/Broadcast-Multimedia-Dienstes an einem Komprimierer (25) Logik für unidirektionale Kopfteilkomprimierung unterworfen wird, wobei das Verfahren durch die folgenden Schritte gekennzeichnet ist:
• Empfangen einer Zugriffsanforderung (62, 92), die anzeigt, dass die abgesetzte Einheit (40) Erstzugriff auf einen Multicast-/Broadcast-Multimedia-Dienst begehrt; und als Antwort darauf
• Erzeugen vor der Erzeugung eines Initialisierungspakets des Medienflusses (34) und außerhalb der Kopfteilkomprimierungslogik eines Auslösesignals (64), welches an den Komprimierer (25) angelegt wird, um einen niedrigsten Komprimierungszustand der Kopfteilkomprimierungslogik auszulösen, wobei das Auslösesignal (64) unter Verwendung eines oder mehrerer Multicast-/Broadcast-Kanalerfassungsereignisse abgeleitet wird, die durch die abgesetzte Einheit (40) eingeleitet werden.

2. Verfahren nach Anspruch 1, wobei die Kopfteilkomprimierungslogik robuste Kopfteilkomprimierung, ROHC, in einem unidirektionalen Modus durchführt, und der niedrigste Komprimierungszustand der Initialisierungs- und Aktualisierungs, IR,-Zustand ist.

3. Verfahren nach Anspruch 1, wobei die Zugriffsanforderung eine Zugriffswiederaufnahmeanforderung (92) ist, die anzeigt, dass die abgesetzte Einheit (40) bei Stoßen auf ein Dekomprimierungsproblem mit dem Medienfluss (34) eine Wiederaufnahme des Zugriffs auf den Multicast-/Broadcast-Multimedia-Dienst begehrt.

4. Verfahren nach Anspruch 3, wobei das Dekomprimierungsproblem ein Komprimierungsinitialisierungsfehler oder ein statischer Kontextschaden bei der Komprimierung ist.

5. Kommunikationsnetz (20), umfassend:
• einen Multicast-/Broadcast-Multimedia-Server (21), der so ausgelegt ist, dass er einen Multicast-/Broadcast-Multimedia-Dienst für eine abgesetzte Einheit (40) über eine Luftschnittstelle (38) verfügbar macht;
• einen Kopfteilkomprimierer (25), der so ausgelegt ist, dass er einen Medienfluss (34) des Multicast-/Broadcast-Multimedia-Dienstes Logik für unidirektionale Kopfteilkomprimierung zum Komprimieren eines Kopfteils des Medienflusses (34) unterwirft;
**gekennzeichnet durch**
• einen Netzknoten (60), der so ausgelegt ist, dass er bei Empfang einer Zugriffsanforderung (62, 92), die anzeigt, dass eine abgesetzte Einheit (40) Erstzugriff auf den Multicast-/Broadcast-Multimedia-Dienst begehrt, vor der Erzeugung eines Initialisierungspakets des Medienflusses (34) und außerhalb der Kopfteilkomprimierungseinheit ein Auslösesignal (64) erzeugt, das an den Komprimierer (25) angelegt wird, um einen niedrigsten Komprimierungszustand der Kopfteilkomprimierungslogik auszulösen, wobei das Auslösesignal (64) unter Verwendung eines oder mehrerer Multicast-/Broadcast-Multimedia-Kanalerfassungsereignisse abgeleitet wird, die durch die abgesetzte Einheit (40) eingeleitet werden.

6. Netz nach Anspruch 5, wobei die Kopfteilkomprimierungslogik so konfiguriert ist, dass sie robuste Kopfteilkomprimierung, ROHC, in einem unidirektionalen Modus durchführt, und der niedrigste Komprimierungszustand der Initialisierungs- und Aktualisierungs, IR,-Zustand ist.

7. Netz nach Anspruch 5, wobei die Zugriffsanforderung eine Zugriffswiederaufnahmeanforderung (92) ist, die anzeigt, dass die abgesetzte Einheit (40) bei Stoßen auf ein Dekomprimierungsproblem mit dem Medienfluss (34) eine Wiederaufnahme des Zugriffs auf den Multicast-/Broadcast-Multimedia-Dienst begehrt.

8. Netz nach Anspruch 7, wobei das Dekomprimierungsproblem ein Komprimierungsinitialisierungsfehler oder ein statischer Kontextschaden bei der Komprimierung ist.

9. Netz nach Anspruch 5, wobei der Netzknoten (60), der so ausgelegt ist, dass er das Auslösesignal (64) erzeugt, ein Knoten ist, an welchem sich der Multicast-/Broadcast-Multimedia-Server (21) befindet.

10. Netz nach Anspruch 5, wobei der Netzknoten (60), der so ausgelegt ist, dass er das Auslösesignal (64) erzeugt, ein versorgender Paketdatenknoten, PDSN, ist.

## Revendications

1. Procédé de fonctionnement d'un réseau de communication (20) dans lequel un service multimédia à diffusion multiple/générale est mis à la disposition d'une unité distante (40) sur une interface radio (38), un flux multimédia (34) du service multimédia à diffusion multiple/générale étant soumis à une logique de compression unidirectionnelle d'en-tête sur un compresseur (25), le procédé étant **caractérisé par** les étapes consistant à :
- recevoir une demande d'accès (62, 92) indiquant que l'unité distante (40) souhaite un accès initial au service multimédia à diffusion multiple/générale ; et, en réponse,
- avant la production d'un paquet initial du flux multimédia (34) et en dehors de la logique de compression d'en-tête, produire un signal de déclenchement (64) qui est appliqué au compresseur (25) pour déclencher un état de compression minimale de la logique de compression d'en-tête, le signal de déclenchement (64) étant dérivé à l'aide d'un ou plusieurs événements d'acquisition de canal de diffusion générale/multiple commandés par l'unité distante (40).

2. Procédé selon la revendication 1, dans lequel la logique de compression d'en-tête exécute une compression robuste d'en-tête, ROHC, dans un mode unidirectionnel et l'état de compression minimale est l'état d'initialisation et de rafraîchissement, IR.

3. Procédé selon la revendication 1, dans lequel ladite demande d'accès est une demande d'accès réinitialisé (92) indiquant que l'unité distante (40) souhaite un accès réinitialisé au service multimédia à diffusion multiple/générale après avoir rencontré un problème de décompression sur le flux multimédia (34).

4. Procédé selon la revendication 3, dans lequel le problème de décompression est un échec d'initialisation de la compression ou un endommagement du contexte statique de compression.

5. Réseau de communication (20) comprenant :
- un serveur multimédia à diffusion multiple/générale (21) conçu pour mettre un service multimédia à diffusion multiple/générale à la disposition d'une unité distante (40) sur une interface radio (38) :
- un compresseur d'en-tête (25) conçu pour soumettre un flux multimédia (34) du service multimédia à diffusion multiple/générale à une logique de compression unidirectionnelle d'en-tête afin de comprimer un en-tête du flux multimédia (34) ;
**caractérisé par** :
- un noeud de réseau (60) qui est conçu pour, après réception d'une demande d'accès (62, 92) indiquant que l'unité distante (40) souhaite un accès initial au service multimédia à diffusion multiple/générale, avant la production d'un paquet initial du flux multimédia (34) et en dehors de la logique de compression d'en-tête, produire un signal de déclenchement (64) qui est appliqué au compresseur (25) pour déclencher un état de compression minimale de la logique de compression d'en-tête, le signal de déclenchement (64) étant dérivé à l'aide d'un ou plusieurs événements d'acquisition de canal de diffusion générale/multiple commandés par l'unité distante (40).

6. Réseau selon la revendication 5, dans lequel la logique de compression d'en-tête exécute une compression robuste d'en-tête, ROHC, dans un mode unidirectionnel et l'état de compression minimale est l'état d'initialisation et de rafraîchissement, IR.

7. Réseau selon la revendication 5, dans lequel ladite demande d'accès est une demande d'accès réinitialisé (92) indiquant que l'unité distante (40) souhaite un accès réinitialisé au service multimédia à diffusion multiple/générale après avoir rencontré un problème de décompression sur le flux multimédia (34).

8. Réseau selon la revendication 7, dans lequel le problème de décompression est un échec d'initialisation de la compression ou un endommagement du contexte statique de compression.

9. Réseau selon la revendication 5, dans lequel le noeud de réseau (60) qui est conçu pour produire le signal de déclenchement (64) est un noeud sur lequel réside le serveur multimédia à diffusion multiple/généralisée (21).

10. Réseau selon la revendication 5, dans lequel le noeud de réseau (60) qui est conçu pour produire le signal de déclenchement (64) est un noeud servant des données en paquets, PDSN.
